# EUROPEAN PATENT APPLICATION

(11) **EP 3 361 043 A1**
(43) Date of publication of application: **15.08.2018**
(21) Application number: 17205215.1
(22) Date of filing: 04.12.2017
(51) Int. Cl.: E21B 43/10, B24B 39/02

(54) **BURNISHING ASSEMBLY SYSTEMS AND METHODS**

(30) Priority: 05.12.2016 US 201615368757
(71) Applicant: OneSubsea IP UK Limited, London EC4V 6JA (GB)
(72) Inventor: THEISS, David Harold, Tomball, TX Texas 77377 (US); HALL, Douglas Drew, Houston, TX Texas 77018 (US)
(74) Representative: Schlumberger Intellectual Property Department

(57) **Abstract**

A technique facilitates formation of a burnished region, e.g. a seal region, via plastic deformation of an internal surface. The technique utilizes a burnishing assembly which may comprise a stem sized for insertion into a tubular region. The stem may be combined with an actuator and a plurality of rolling elements mounted on the actuator. When the actuator is actuated to a radially outward position, the plurality of rolling elements may be moved into engagement with the internal surface until plastic deformation occurs. The stem may then the rotated to force the plurality of rolling elements along the internal surface so as to form a region of plastic deformation. The plastic deformation may be located to form a seal, for example, between adjacent components.

## Description

### BACKGROUND

Hydrocarbon fluids such as oil and natural gas are obtained from a subterranean geologic formation, referred to as a reservoir, by drilling a well that penetrates the hydrocarbon-bearing geologic formation. The well may be drilled at the surface or at a subsea location and the flow of fluids may be handled by several different types of equipment. In subsea operations, for example, a subsea tree may be mounted to a wellhead such that a tubular flow path is provided within the subsea tree. Various components along the tubular flow path may be joined and sealed with respect to each other via a seal or seals. If disruptions occur with respect to the seal, however, leakage can result.

### SUMMARY

In general, systems and methodologies are described for sealing or resealing an interface between parts and/or repairing a defective location along a component, e.g. along a pressure vessel or a pressure flow path of a component. A burnishing assembly is used to form a plastically deformed region along an internal surface, e.g. an internal metal surface. The plastically deformed region may be located to create a seal. The burnishing assembly may comprise a stem sized for insertion into a tubular region. The stem may be combined with an actuator and a plurality of rolling elements mounted on the actuator. When the actuator is actuated to a radially outward position, the plurality of rolling elements is moved into engagement with the internal surface until plastic deformation occurs. The stem may then be rotated to force the plurality of rolling elements along the internal surface so as to form a region of plastic deformation. The plastic deformation may be formed as a ring positioned to create, for example, a seal between adjacent components.

However, many modifications are possible without materially departing from the teachings of this disclosure. Accordingly, such modifications are intended to be included within the scope of this disclosure as defined in the claims.

### BRIEF DESCRIPTION OF THE DRAWINGS

Certain embodiments of the disclosure will hereafter be described with reference to the accompanying drawings, wherein like reference numerals denote like elements. It should be understood, however, that the accompanying figures illustrate the various implementations described herein and are not meant to limit the scope of various technologies described herein, and:
Figure 1 is a schematic illustration of an example of a burnishing tool assembly comprising a plurality of rolling elements positioned to cause plastic deformation of a corresponding surface, according to an embodiment of the disclosure;
Figure 2 is a schematic cross-sectional illustration of an example of the burnishing tool assembly at two different radial and longitudinal positions, according to an embodiment of the disclosure;
Figure 3 is an expanded illustration of one set of rolling elements mounted in an actuator, e.g. a piston, for movement between a radially inward position and a radially outward position, according to an embodiment of the disclosure; and
Figure 4 is an illustration of an example of the burnishing tool assembly deployed along the interior of a subsea tubular component, e.g. a subsea tree, to enable formation of a seal via controlled plastic deformation, according to an embodiment of the disclosure.

### DETAILED DESCRIPTION

In the following description, numerous details are set forth to provide an understanding of some embodiments of the present disclosure. However, it will be understood by those of ordinary skill in the art that the system and/or methodology may be practiced without these details and that numerous variations or modifications from the described embodiments may be possible.

The present disclosure generally relates to a methodology and system which utilize a burnishing assembly, e.g. a sealing assembly, to provide controlled plastic deformation along an interior wall surface. The burnishing assembly enables formation of a seal via plastic deformation of an internal surface, e.g. an internal metal surface. For a sealing application, for example, the burnishing assembly may be inserted into a tubular region within a structure and then actuated to form a region of plastic deformation. The plastic deformation may be positioned to establish a seal between, for example, adjacent components.

According to an embodiment, the sealing assembly comprises a stem, e.g. a mandrel, sized for insertion into the tubular region, e.g into a tubular region within a subsea tree, a pipeline, a flow conduit, a manifold, a pressure vessel, or another component. The stem may be combined with an actuator and a plurality of rolling elements mounted on the actuator. When the actuator is actuated to a radially outward position, the plurality of rolling elements is moved into engagement with an internal surface (defining the tubular region) until plastic deformation occurs. The stem may then be rotated to force the plurality of rolling elements along the internal surface so as to form a ring of plastic deformation.

The plastic deformation may be located and oriented to form a seal between adjacent components. In some applications, the stem also may be moved longitudinally during rotation to form a wider ring of plastic deformation along the seal region. The rolling elements may be in the form of ball elements, cylindrical elements, or other suitable rolling elements able to form the desired plastic deformation when sufficient force is applied via the actuator.

In an operational example, the sealing assembly may be sized for insertion into a subsea tree to address leakage at an outlet flange of a choke on the subsea tree. In such an application, the sealing assembly is actuated to a radially contracted configuration for movement through the smaller diameter of a bore restriction and then into position within the subsea tree at the outlet flange of the production choke. Once in position, the sealing assembly may be actuated to a radially outward or expanded configuration which forces the rolling elements into engagement with the inner metal wall surface of the subsea tree at the outlet flange of the production choke.

Sufficient force is applied by the actuator to cause the plurality of rolling elements to plastically deform the inner metal wall surface. The stem is then rotated so the rolling elements are able to form a ring of plastic deformation along this inner metal wall surface. The ring of plastic deformation may be located to form a continuous metal surface across the connection between the choke body flange and an adjacent mating flange. The deformation of the metal material across this connection effectively forms a seal between the adjacent components where a leak path might otherwise reside. In some applications, the stem may be moved longitudinally while rotated to create a wider ring of plastic deformation so as to ensure creation of the seal between adjacent components.

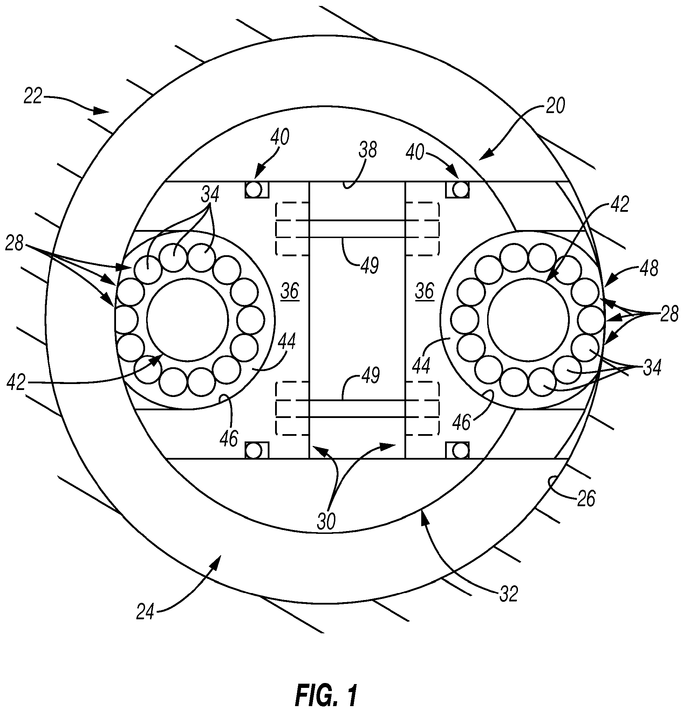

Referring generally to Figure 1, an example of a burnishing/sealing assembly 20 is illustrated. In this embodiment, the sealing assembly 20 is illustrated as deployed within a component 22 having a generally tubular interior 24 defined by an interior surface 26, e.g. an interior metal surface. In some embodiments, the component 22 may comprise a pair of components or pair of component sections which are sealed together via operation of sealing assembly 20. For example, the component 22 may comprise a subsea tree having interior metal surface 26 in the form of an internal tubular flow passage. However, the component 22 may comprise other components, such as a pipe, other tubular member, or component having a tubular region. In some applications, the sealing assembly 20 may be used to form a seal across portions of the components/subsea tree 22 or to form a seal between the subsea tree and an adjacent flange or other component, as described in greater detail below.

In the embodiment illustrated, the sealing assembly 20 comprises a plurality of rolling elements 28 mounted on an actuator 30 which, in turn, may be mounted on a rotatable stem 32, e.g. a rotatable mandrel. The rolling elements 28 may comprise ball elements 34, as illustrated, or they may comprise other suitable rolling elements. For example, the rolling elements 28 may comprise variously shaped rollers or other elements able to apply localized pressure so as to cause controlled plastic deformation of the interior surface 26.

According to an embodiment, the actuator 30 comprises at least one piston 36 on which the rolling elements 28 are mounted. Each piston 36 may be slidably mounted within a corresponding passage 38 formed within stem 32. An appropriate seal or seals 40, e.g. O-ring seals, may be used between each piston 36 and the surrounding wall surface of corresponding passage 38.

In the embodiment illustrated, the actuator 30 may comprise a pair of opposed pistons 36 which are both slidably received in the corresponding passage 38 for actuation between a radially inward position and a radially outward, engaged position. In Figure 1, the left side piston 36 is illustrated in the radially contracted position to facilitate movement of the sealing assembly 20 to a desired location within component 22. However, the right side piston 36 is illustrated in the radially extended position in which the plurality of rolling elements 28 is engaged with interior surface 26. In normal operation, both pistons 36 may be simultaneously actuated from the radially inward position to the radially extended position. Depending on the application, the actuator 30, e.g. pistons 36, may be actuated hydraulically, electrically, mechanically or by another suitable actuation technique/mechanism. For example, the actuator 30, e.g. piston 36, may be actuated hydraulically via hydraulic fluid supplied under pressure or electrically via an electric motor, solenoid, or other type of electrically powered device.

Referring again to the embodiment of Figure 1, the rolling elements 28 are divided into sets of rolling elements 28 and at least one set of rolling elements 28 is mounted on each piston 36. For example, each set of rolling elements 28 may be movably mounted about a pin 42 or other suitable member carried by the corresponding piston 36. In some applications, each pin 42 may be in the form of a threaded dowel pin threaded into secure engagement with the corresponding piston 36. The rolling elements 28, e.g. ball elements 34, of each set may be received in a corresponding carrier recess 44 formed between pin 42 and an internal wall surface 46 of the corresponding piston 36. The rolling elements 28 are able to move, e.g. roll, within this carrier recess 44 in a manner which enables formation of a desired ring of plastic deformation along the interior surface 26.

During a sealing operation, for example, the sealing assembly 20 is moved via a suitable conveyance and into the interior of the overall component 22 along the tubular interior 24. In some embodiments, the sealing assembly 20 is moved along the interior surface 26, e.g. interior metal surface, until the rolling elements 28 are located proximate a desired seal area 48. Once at the desired seal area 48, the actuator 30, e.g. one or more pistons 36, is actuated to move the plurality of rolling elements 28 into engagement with interior surface 26 at seal area 48. The rolling elements 28 are moved with sufficient force to plastically deform the interior surface 26.

The stem 32, e.g. mandrel, is then rotated so the plurality of rolling elements 28 move along interior surface 26 and create a region, e.g. ring, of plastic deformation along the interior surface 26. For example, the stem 32 may be rotated at least 360° to form a circumferential ring extending along the interior of component 22 throughout the entire circumference surrounding tubular interior 24. When the plurality of rolling elements 28 is initially forced into interior surface 26, the externally located rolling elements 28 cause the initial plastic deformation. For example, one, two, three, or more of the rolling elements 28 may cause the initial plastic deformation but sequential rolling elements 28 of each set of rolling elements are moved into engagement with interior surface 26 as the stem 32 is rotated. During rotation of stem 32, the rolling elements 28 are able to rotate within carrier recess 44 and roll along interior surface 26, thus forming the overall ring of plastic deformation. In some applications, the sealing assembly 20 may be moved in a longitudinal direction during rotation of stem 32 through several rotations to create a wider ring of plastic deformation in the form of, for example, a helix, as described in greater detail below.

The actuator 30, e.g. one or more pistons 36, may be biased toward the radially retracted position via a suitable biasing mechanism 49. The biasing mechanism 49 ensures the actuator 30 is retracted back to its radially contracted position following formation of the desired plastic deformation along interior surface 26. By way of example, the biasing mechanism 49 may comprise a spring or springs coupled between pistons 36. The spring(s) draws pistons 36 radially inward after the force actuating pistons 36 to the radially outward, engaged position is reduced. However, external pressures, camming action of a change in diameter along interior surface 26, or other mechanisms or techniques may be used to transition the actuator 30 back from a radially extended position to a radially contracted position to facilitate removal of sealing assembly 20 from component 22.

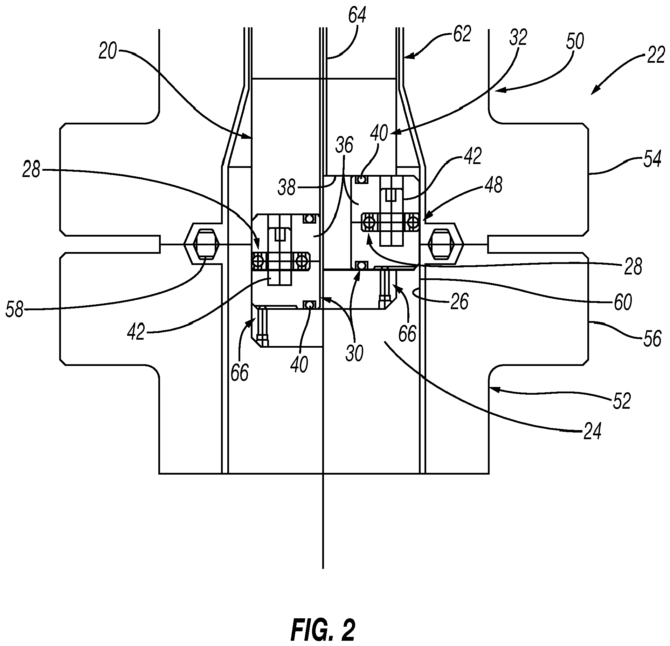

Referring generally to Figure 2, an embodiment of the sealing assembly 20 is illustrated as disposed within overall component 22 which, in this example, is in the form of a pair of adjacent subsea components 50, 52. The subsea components 50, 52 may be coupled together via flanges 54, 56, respectively. By way of example, flange 54 may be in the form of a choke body flange and flange 56 may be a mating flange to which the choke body flange 54 is mounted. A seal 58, e.g. a metallic seal which may be in the form of a ring gasket, may be disposed between the flanges 54, 56. The seal 58 can begin to leak or may be susceptible to leakage under certain conditions but sealing assembly 20 may be used to form a new metal seal between flanges 54, 56.

In this example, the subsea components 50, 52 include tubular interior 24 defined by interior metal surface 26. In some applications, the subsea components 50, 52 may include a thin layer of weld overlay 60 positioned along tubular interior 24 and defining interior metal surface 26. The weld overlay or other material forming interior surface 26 may be a metal material sufficiently malleable to enable a desired displacement of material during the plastic deformation to create a metal seal along the joint between component 50 and component 52.

Depending on the application, the subsea component 50, e.g. the upper component, may have a radially constricted region 62 along tubular interior 24. Accordingly, the sealing assembly 20 is deployed down into component 22 (subsea components 50, 52) with the actuator 30, e.g. one or more pistons 36, in the radially contracted position illustrated on the left side of Figure 2. The radially contracted configuration allows the sealing assembly 20 to be moved through the radially constricted region 62 and to the desired seal area 48.

Once the plurality of rolling elements 28 is at the desired seal area 48, the actuator 30, e.g. pistons 36, may be actuated to the radially extended position illustrated on the right side of Figure 2. In some embodiments, the pistons 36 may be actuated hydraulically via hydraulic fluid delivered to piston passage 38 under pressure via a hydraulic flow passage 64 along stem 32. It should be noted the pistons 36 may be retained in stem 32 via suitable retention mechanisms 66, such as piston retainer screws slidably engaged with corresponding slots as illustrated.

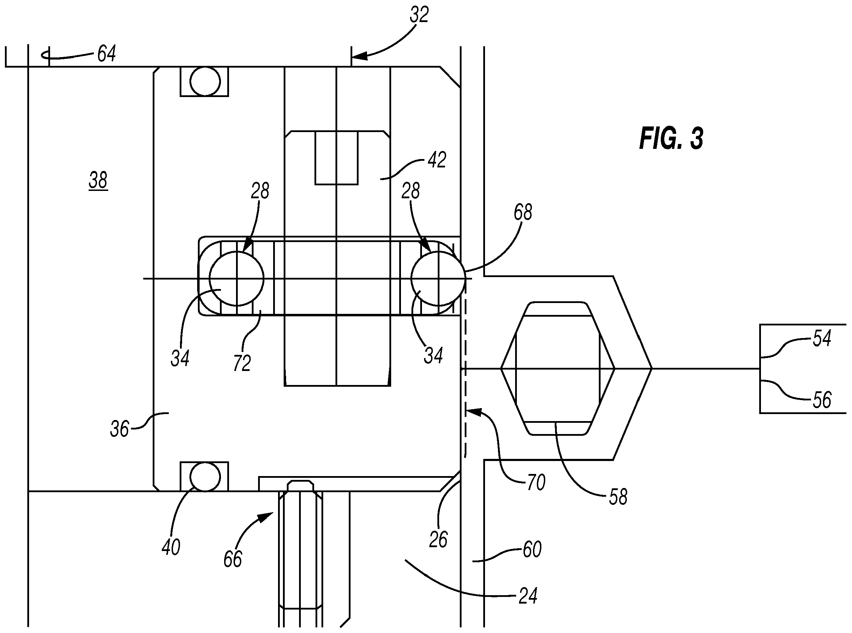

When the actuator 30 is transitioned to the radially extended position, the plurality of rolling elements 28 is moved into engagement with interior surface 26 to cause a plastic deformation 68, as further illustrated in Figure 3. The stem 32 may be rotated to cause the plurality of rolling elements 28 to roll along interior surface 26 and to thus cause a ring of plastic deformation 70 about the circumference of tubular interior 24. In some applications, the stem 32 is moved longitudinally along tubular interior 24 during rotation of the stem 32. As illustrated in Figure 2, the stem 32 may be moved longitudinally from a first longitudinal position illustrated on the left side of Figure 2 to a second longitudinal position illustrated on the right side of Figure 2, or vice versa, thus causing plastic deformation in a helix or other form so as to create a wider ring of plastic deformation 70, as further illustrated in Figure 3.

In the specific embodiment illustrated in Figures 2 and 3, the rolling elements 28 are in the form of ball elements 34. The ball elements 34 are divided into two sets in which each set of ball elements 34 is mounted about the corresponding pin 42 or other suitable structure within the corresponding piston 36. The ball elements 34 may be rotatably mounted within a corresponding carriage 72. Additionally, each carriage 72 may be rotatably mounted about the corresponding pin 42 and may be structured to allow ball elements 34 to rotate as they roll along the interior surface 26 during rotation of stem 32. However, each carriage 72 is sized and positioned such that ball elements 34 extend a sufficient distance from the radially outlying surface of the corresponding piston 36 so as to create the ring of plastic deformation 70 at a desired depth. The rolling elements 28 may be formed from hardened steel, a suitable ceramic material, or another material sufficiently harder than the material of interior surface 26.

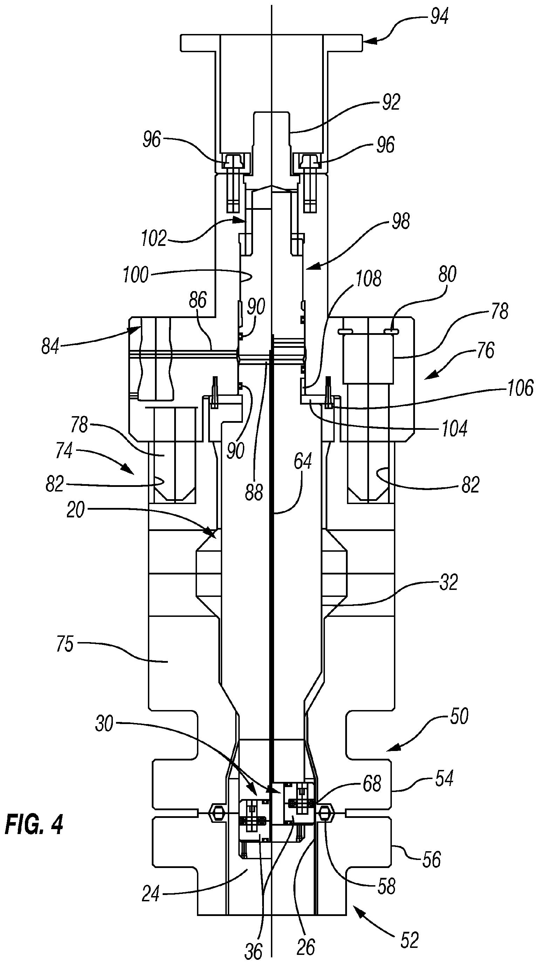

Referring generally to Figure 4, an embodiment of sealing assembly 20 is illustrated as deployed to a subsea location within the overall component 22. In this example, the overall component 22 again comprises subsea component 50 and subsea component 52. The subsea component 50 may be in the form of a subsea tree 74 mounted on the corresponding subsea component 52, e.g. a wellhead. However, subsea components 50, 52 may comprise a variety of subsea components, including components of a horizontal tree, a vertical tree, a hybrid tree, a modular tree, a production tree, an injection tree, a wellhead, a spool adapter, a manifold, a flow line, or other suitable components. In Figure 4, a portion of the subsea tree 74 is illustrated and is in the form of a choke body 75 having choke body flange 54 coupled with mating flange 56. In this embodiment, the sealing assembly 20 comprises actuator 30 in the form of opposed pistons 36 which are actuated hydraulically via hydraulic pressure applied through hydraulic flow passage 64.

To facilitate use with a subsea component, e.g. subsea tree 74, the sealing assembly 20 may comprise an anti-rotation sleeve 76 through which stem 32 rotatably extends. In this example, the anti-rotation sleeve 76 comprises anti-rotation pins 78 which may be releasably mounted with respect to the anti-rotation sleeve 76 via snap rings 80 or other suitable fasteners. The anti-rotation pins 78 are positioned for receipt in corresponding recesses 82 of subsea tree 74, e.g. of choke body 75.

The anti-rotation sleeve 76 also may comprise a hot stab receptacle 84 positioned for operative engagement with a remotely operated vehicle (ROV) to enable application of hydraulic pressure to pistons 36 via hydraulic passage 64. The hot stab receptacle 84 be placed in fluid communication with hydraulic passage 64 via a corresponding hydraulic passage 86 extending into fluid engagement with hydraulic passage 64 via transverse hydraulic flow channels 88 located between seals 90 positioned along stem 32 as illustrated.

In this example, stem 32 is coupled with a drive extension 92 appropriately constructed for engagement by the torque drive of an ROV. This allows the stem 32 to be selectively rotated via an ROV deployed to the subsea tree 74. In some applications, a torque bucket 94 may be positioned over drive extension 92 and secured to anti-rotation sleeve 76 by suitable fasteners 96, e.g. screws. The torque bucket 94 may be structured for coupling with the ROV to facilitate rotation of the drive extension 92.

The sealing assembly 20 also may comprise a mechanism 98 for providing longitudinal motion of stem 32. By way of example, mechanism 98 may comprise a threaded region 100 located between stem 32 and the surrounding anti-rotation sleeve 76. Because the stem 32 and anti-rotation sleeve 76 are threadably engaged, rotation of stem 32 while anti-rotation sleeve 76 is rotationally constrained via anti-rotation pin 78 forces stem 32 to move in a longitudinal direction.

Longitudinal movement of stem 32 relative to drive extension 92 may be accommodated via slidable drive splines 102. Additionally, the longitudinal movement of stem 32 relative to anti-rotation sleeve 76 may be restricted via a suitable mechanism, such as a retainer plate 104 secured to anti-rotation sleeve 76 via suitable fasteners 106. In this example, the retainer plate 104 is slidably captured in a corresponding annular stem recess 108, thus limiting the overall longitudinal movement of stem 32 relative to anti-rotation sleeve 76.

The embodiment illustrated in Figure 4 is constructed for use with an ROV. For example, pressure to actuate pistons 36 may be provided via engagement of a suitable ROV pressure supply with hot stab receptacle 84. Once the pistons 36 are actuated to the radially outward position, both rotational and longitudinal movement of stem 32 may be provided by engaging the ROV with drive extension 92 via a suitable ROV torque tool. The ROV may then be operated to rotate drive extension 92 and stem 32 which simultaneously causes the longitudinal movement of stem 32.

During a sealing operation, the sealing assembly 20 is lowered over the choke body 75 and the downwardly oriented anti-rotation pins 78 are moved into engagement with corresponding recesses 82. The ROV is then engaged with drive extension 92 located in torque bucket 94 and operated to rotate the drive extension 92 in the appropriate direction until the anti-rotation sleeve 76 begins to lift from the choke body 75. This means the sealing assembly 20 is positioned in a fully down position (see left side of Figure 4).

The ROV is then operated to apply pressure through hot stab receptacle 84 and down through hydraulic fluid flow passage 64 so as to drive pistons 36 in the radially outward direction. The pistons 36 are moved to the radially extended position such that the harder rolling elements 28 are forced into the softer interior surface 26 to cause the plastic deformation 68. An operator of the ROV then causes the ROV to rotate drive extension 92 and thus stem 32 in an opposite direction while maintaining sufficient pressure via hot stab receptacle 84 to maintain pistons 36 in the radially extended position.

As the stem 32 is rotated, threaded region 100 causes the stem 32 to move longitudinally and to advance in an upward direction. This rotational and longitudinal movement causes the desired wide, ring of plastic deformation 70 across the joint/connection region between flanges 54 and 56. Rotation of the stem 32 may be continued until halted via retainer plate 104 stopping against the edge of annular stem recess 108. When the retainer plate 104 engages the edge of annular stem recess 108, a sudden increase in torque occurs and the increase can be detected by an operator. In some applications, the operator may reverse the rotational direction so as to move the stem 32 and rolling elements 28 back down along the ring of plastic deformation 70.

Depending on the specifics of a given burnishing application, the components of burnishing/sealing assembly 20 may vary. Additionally, the assembly 20 may be used in a variety of subsea applications and other applications to enable burnishing of material along internal surfaces of many types of components. The size, shape, and type of components utilized in assembly 20 may be selected according to the parameters of the operation. For example, the assembly 20 may utilize various types of actuators, including inflatable actuators, pivoting actuators, single piston actuators, multiple piston actuators, and other suitable types of actuators. The actuators also may be driven hydraulically, electrically, mechanically, or by other suitable techniques to provide the desired force for driving the rolling elements into the material of the interior surface 26. Various types of rolling elements 28 also may be selected to provide a desired plastic deformation at a desired depth during movement of stem 32.

Although a few embodiments of the disclosure have been described in detail above, those of ordinary skill in the art will readily appreciate that many modifications are possible without materially departing from the teachings of this disclosure. Accordingly, such modifications are intended to be included within the scope of this disclosure as defined in the claims.

## Claims

1. A method of sealing, comprising:
mounting rolling elements on a piston;
coupling the piston to a stem;
moving the stem along an interior metal surface within a subsea component until the rolling elements are located proximate a seal area;
actuating the piston to move the rolling elements outwardly into engagement with the interior metal surface at the seal area to plastically deform the interior metal surface at the seal area; and
forming a seal by rotating the stem to form a ring of plastic deformation along the seal area.

2. The method as recited in claim 1, further comprising moving the stem longitudinally while rotating the stem to form a wider ring of plastic deformation.

3. The method as recited in claim 1, wherein forming comprises forming the seal between two flanges.

4. The method as recited in claim 1, wherein the subsea component comprises a subsea tree and wherein forming comprises forming the seal between a choke body flange of the subsea tree and a mating flange.

5. The method as recited in claim 1, wherein mounting rolling elements comprises mounting ball elements on the piston.

6. The method as recited in claim 1, wherein mounting rolling elements comprises mounting a plurality of sets of rolling elements on a plurality of pistons.

7. The method as recited in claim 1, wherein actuating the piston comprises hydraulically actuating the piston.

8. The method as recited in claim 1, wherein actuating the piston comprises electrically actuating the piston.

9. The method as recited in claim 1, wherein forming the seal comprises rotating the stem with a remotely operated vehicle (ROV).

10. A system, comprising:
a sealing assembly for forming an internal seal along a seal area where two tubular components are joined, the seal being formed via plastic deformation of an internal metal surface, the sealing assembly comprising:
a stem sized for insertion into at least one of the two tubular components;
an actuator mounted to the stem for actuation between radially inward and radially outward positions; and
a plurality of rolling elements mounted on the actuator such that actuation of the actuator to the radially outward position causes the plurality of rolling elements to move into engagement with and to plastically deform the internal metal surface, the stem being rotatable to force the plurality of rolling elements to form a ring of plastic deformation at the seal area.

11. The system as recited in claim 10, wherein the stem is longitudinally movable while rotating to form a wider ring of plastic deformation at the seal area.

12. The system as recited in claim 10, wherein at least one of the two tubular components comprises a mounting flange of a subsea tree.

13. The system as recited in claim 10, wherein the actuator comprises a pair of opposed pistons.

14. The system as recited in claim 13, wherein the plurality of rolling elements comprises at least one set of rolling elements mounted on each opposed piston of the pair of opposed pistons.

15. The system as recited in claim 10, wherein the plurality of rolling elements comprises a plurality of ball elements.

16. The system as recited in claim 15, wherein ball elements of the plurality of ball elements are formed of a hardened steel.

17. The system as recited in claim 15, wherein ball elements of the plurality of ball elements are formed of a ceramic material.

18. A method, comprising:
mounting rolling elements to an actuator to form a burnishing assembly;
moving the burnishing assembly into a tubular region of a component;
actuating the actuator to move the rolling elements into a wall forming the tubular region until the material forming the wall is plastically deformed; and
moving the rolling elements along the wall until a region of plastic deformation is formed.

19. The method as recited in claim 18, further comprising forming the region of plastic deformation in a ring along a seam between two components to form a metal seal between the two components.

20. The method as recited in claim 18, further comprising mounting the actuator on a stem and rotating the stem via an ROV to form the ring of plastic deformation.
